# EUROPEAN PATENT SPECIFICATION

(11) **EP 3 034 266 B1**
(45) Date of publication and mention of the grant of the patent: **06.12.2017**
(21) Application number: 14198706.5
(22) Date of filing: 18.12.2014
(51) Int. Cl.: B29C 47/00, B29C 47/06, B29C 47/88, B29C 47/92, B29C 35/02, B29C 35/06, B29C 35/00, B29K 7/00, B29K 9/06, B29K 23/00, B29C 47/90, B29K 105/04, B29K 105/06, B29K 105/12, B29L 7/00, B29L 9/00, B29L 31/26, B29C 35/04

(54) **Method and arrangement for manufacturing a reinforced expanded rubber sealing strip**
Methode und Vorrichtung zur Herstellung verstärkter, geschäumter Kautschuk-Dichtstreifen
Méthode et dispositif pour la fabrication d'une bande d'étanchéité de caoutchouc cellulaire renforcé

(43) Date of publication of application: 22.06.2016
(73) Proprietor: Trelleborg Sealing Profiles Sweden AB, 331 29 Värnamo (SE)
(72) Inventor: Arnqvist, Per, 352 43 Växjö (SE); Björkqvist, Markku, 331 42 Värnamo (SE)
(74) Representative: Awapatent AB

(56) References cited:
- DE-C1- 4 314 191
- FR-A1- 2 980 134
- US-A- 4 911 873
- US-A1- 2005 095 374
- Niir Board Of Consultants And Engineers: "Rubber: Materials and Processing Technology" In: "Rubber: Materials and Processing Technology", 31 December 2010 (2010-12-31), ASIA PACIFIC BUSINESS PRESS Inc., Delhi, India, XP055190479, ISBN: 978-8-17-833005-1 page 58, * page 58 *

## Description

### Field of the invention

The present invention relates to a method of manufacturing a reinforced expanded rubber sealing strip, having embedded therein a reinforcing strip.

### Background of the invention

The present invention relates to a sealing strip intended to be used on wings and swingable, slidable or otherwise movable members such as doors or windows, for closing an opening, or parts co-operating with such wings, e.g. door and window frames. The sealing strips are primarily intended for the purpose of sealing or insulating against cold, heat, draught, wind, airborne pollutants, but may also be used for vibration dampening or sound insulation. The sealing strips may be used in connection with wings in buildings, such as doors or windows, as well as in vehicles, machines etc.

Extruded sealing strips of solid elastomeric material with embedded reinforcing strips are known in the art. The purpose of the reinforcement is to resist longitudinal stretching of the strips when they are mounted. If an extruded sealing strip of solid elastomeric material with embedded reinforced strip is stretched when it is mounted it may later contract when the strain applied during mounting is removed and this may result in gaps between the sealing strip and the mounting area.

Extruded sealing strips of cellular material with embedded reinforcements is known from GB 861 312, where a reinforcing string of fibrous material that has been lubricated with a composition of an adhesive material is added in a strip of expanded rubber. The reinforcing string is drawn through the vulcanization steps at the same rate as the movement of the expanded rubber strip.

A method and apparatus for manufacturing sealing strips comprising rubber and thermoplastic is known from DE 43 14 191 C1.

A method for applying a decorative layer onto a weather strip is disclosed in US 2005/0095374 A1.

### Summary of the invention

To reinforce extruded sealing strips made of cellular material in the same way as is done with reinforced extruded sealing strips of solid elastomeric material has shown to be difficult since the reinforcing strip and the sealing strip will not expand to same extent during vulcanization so that the reinforcing strip has to be stretched afterwards, which would cause the reinforcing strip to detach from the elastomeric matrix of the sealing strip.

It has also shown to be difficult to adhere the reinforcing strip according to GB 861 312 to the expanded rubber strip and that the mechanical properties of the reinforcing strip will be damaged during the vulcanization.

The problem solved by the present invention is to provide a method for producing a reinforced extruded sealing strip of cellular material that overcomes these difficulties.

This problem is solved by a method for manufacturing a reinforced expanded rubber sealing strip comprising extruding, in an extruder, a rubber compound comprising a blowing agent so as to form an elongate rubber compound strip provided with a groove running along the length of the strip; downstream of the extruder, applying a strip of molten thermoplastic material in the groove to form a composite strip of the rubber compound strip and the reinforcing strip; heating the composite strip to expand and vulcanize the rubber compound strip to form a vulcanized composite strip; and cooling the vulcanized composite strip so as to shrink the rubber compound strip and solidify the strip of molten thermoplastic to form the reinforced expanded rubber sealing strip, wherein said step of applying a reinforcing strip of molten thermoplastic material in the groove to form a composite strip of the rubber compound strip and the reinforcing strip includes applying the reinforcing strip of molten thermoplastic material to the elongated rubber compound strip at an application position, wherein said application position is located downstream of the extruder, but before heating in the heating step. An advantage with this method is that the reinforcing strip of molten thermoplastic material will be in a molten stage during the heating in the heating device, and that the elongated rubber compound strip will expand and vulcanize around the reinforcing strip during heating, so that the molten reinforcing strip will be stretched automatically inside the rubber compound strip to form a vulcanized composite strip. During cooling of this vulcanized composite strip in the cooling device, the expanded rubber strip will shrink and take its final state after a short time of cooling. The reinforced strip of thermoplastic material will be in a molten stage for a longer time during the cooling due to its higher density and the isolating effect from the rubber compound strip, and will solidify inside the completed expanded rubber strip so that stretching of the reinforcing strip of thermoplastic material is not necessary. Another advantage with this method is that the strip of molten thermoplastic is applied to the rubber compound strip downstream of the extruder. If the strip of molten thermoplastic is applied to the extruded profile within the extruder, the typical difference of temperatures will either vulcanize the rubber or freeze the thermoplastic with bad products as a result. Another advantage with this method is that the strip of thermoplastic material is applied in a molten stage and therfore can be applied as an endless string, without the need for interrupting the process for splicing and/or changing reels of the strip of thermoplastic material. Also, by placing the application position downstream of the extruder but before heating in the heating step, it will be eaiser to apply the reinforcing strip into the groove of the elongated rubber compound strip since the rubber compound strip will typically not have started to curve very much at this position.

According to an embodiment said application position for applying the reinforcing strip of molten thermoplastic material to the elongated rubber compound strip is located at an application distance downstream of the extruder, which application distance is equal or less than 2 meter. Application of the strip of molten thermoplastic material to the elongated rubber compound strip within 2 meter from the extruder but before heating in the heating step has shown to be advantageous since the elongated rubber compound strip will not have started to solidify before the strip of molten thermoplastic material is injected.

According to an embodiment said step of applying a reinforcing strip of molten thermoplastic material in the groove to form a composite strip of the rubber compound strip and the reinforcing strip includes applying the reinforcing strip of molten thermoplastic material inside the groove of the elongated rubber compound strip with an injection needle. By injection of the molten thermoplastic material with an injection needle, it will be much easier to place the string of thermoplastic material within the groove of the elongated rubber compound strip.

According to an embodiment, said step of heating the composite strip to expand and vulcanize the rubber compound strip to form a vulcanized composite strip includes heating the composite strip to a temperature in the range of 200-250°C to expand and vulcanize the rubber compound strip, thereby forming the vulcanized composite strip. The heating takes place, according to one embodiment, in a bath of salt with a temperature of 200-250°C and the blowing agents in the rubber compound strip will liberate gas at this temperature to produce desired pores in the rubber and fix the pores so that a cellular structure is formed.

According to an embodiment, the rubber compound expands in the heating device and encloses at least 50% of the circumference of the strip of molten thermoplastic material applied in the groove. The blowing agent in the rubber compound will liberate gas during the heating so that the rubber compound expands, rises and encloses a part of the circumferences of the strip of molten thermoplastic applied in the groove and prevents the strip of thermoplastic material from being damaged by, for example, the salt particles in the bath of salt in the heating device.

According to an embodiment, the rubber compound expands in the heating device and encloses at least 65% of the circumference of the strip of molten thermoplastic material applied in the groove. The strip of molten thermoplastic applied in the groove is prevented from being damaged by the salt particles in the bath of salt of the heating device and the isolating effect from the rubber compound strip will be greater. The strip of molten thermoplastic material can even be completely enclosed by the rubber compund.

According to an embodiment, the vulcanized composite strip is cooled, in said step of cooling the vulcanized composite strip so as to shrink the rubber compound strip and solidify the strip of molten thermoplastic material to form the reinforced expanded rubber sealing strip, to a temperature in the range of 10-50°C. The cooling may take place in water bath with a temperature of about 10-50°C and the rubber compound will shrink and take its final state after short time at this temperature, while the strip of molten thermoplastic material will solidify at this temperature after a longer time due to the higher density and the isolating effect from the surrounding rubber compound strip, and no stretching of the reinforced strip is necessary. The cooling bath is also used for washing off the salt particles that may have attached to the vulcanized composite strip during the heating.

According to an embodiment, the rubber compound includes at least one of: ethylene-propylene diene terpolymer (EPDM), and/or styrene-butadiene rubber (SBR). The rubber material may be an uncured elastomer comprising different types of fillers, such as carbon black, calcium carbonate and kaolin clay, and blowing agents, such as sodium carbonate. Fillers may be used for modifying the appearance of the rubber, and for modifying certain mechanical properties. Blowing agents are used for liberating gas at elevated temperature to produce desired pores in the rubber to create a cellular structure.

According to an embodiment, the thermoplastic material comprises polypropylene (PP) and/or polyethylene (PE). These two compounds will create a chemical bonding with the rubber material during heating in the heating device so that a stable reinforced expanded sealing strip is formed.

It is most preferred to use ethylene-propylene diene terpolymer (EPDM) as the polymer in the rubber compound and polyethylene (PE) as the thermoplastic material, since this combination of compounds is very adhesively compatible and creates a strong chemical bonding during heating in the heating device. These compounds are also cheap and easy to handle.

According to an embodiment, the reinforcing strip of molten thermoplastic material is made of a thermoplastic material reinforced with a fibrous material, preferably glass fiber. This will give a reinforced expanded rubber sealing strip that is even more firm and can better resist longitudinal stretching when the strip is mounted, especially for sealing of corners. Other fibrous materials, such as carbon fiber and/or polyamine or combinations of these fibrous materials can be used.

According to an embodiment, the elongated rubber compound strip has a density of less than 0,6 kg/dm³ after said step of extruding, in an extruder, a rubber compound, and before said step of heating the composite strip to expand and vulcanize the rubber compound strip to form a vulcanized composite strip. By using a rubber compound strip with low density it will be possible to produce an expanded rubber sealing strip with better sealing properties than with a rubber compound with higher density.

According to an embodiment, the groove of the rubber compound strip is centrally located in the strip, as seen in a cross-section taken parallell to a mounting face. This will create a sealing strip that is easy to bend and thereby easy to mount on wings or associated parts.

According to an embodiment, the method further comprises applying a non-reinforced adhesive tape to the reinforced expanded sealing strip after said step of cooling the vulcanized composite strip so as to shrink the rubber compound strip and solidify the strip of molten thermoplastic material to form the reinforced expanded rubber sealing strip. An adhesive tape is applied to the sealing strip so that the strip can be mounted more easily to wing or associated part. Since the sealing strip has been reinforced by the strip of thermoplastic material, a non-reinforced adhesive tape may be used. This will reduce the manufacturing costs by about 40% compared to the use of a reinforced adhesive tape.

The problem is also solved by an arrangement for manufacturing of a reinforced expanded rubber sealing strip comprising an extruder with an extrusion head for production of an elongated rubber compound strip with a groove running along the length of the strip, from a rubber compound comprising a blowing agent; an application device, such as an injection needle, arranged downstream of the extruder for application of a reinforcing strip of molten thermoplastic material in the groove to form a composite strip of the rubber compound strip and the reinforcing strip; a heating device, downstream of the application device, for heating the composite strip for expansion and vulcanization of the rubber compound strip to form a vulcanized composite strip; and a cooling device, downstream of the heating device, for cooling the vulcanized composite strip for shrinkage of the rubber compound strip and solidification of the thermoplastic material of the strip of molten thermoplastic material for formation of the reinforced expanded rubber sealing strip. An advantage with this arrangement is that the reinforcing strip of molten thermoplastic material will be in a molten stage in the heating device and that the elongated rubber compound strip will expand and vulcanize around the reinforcing strip so that the reinforcing strip will be stretched automatically inside the rubber strip and form a vulcanized composite strip. During cooling of this vulcanized composite strip in the cooling device, the rubber compound strip will shrink and take its final state after a short time of cooling. The reinforcing strip will be in a molten state for a longer time during the cooling due to higher density and the isolating effect from the rubber compound strip and will solidify inside the completed expanded rubber strip so that stretching of the reinforcing strip not is necessary after the cooling device.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic view of a production line which carries out the method of the present invention.
Fig 2 is a cross-sectional view of an aperture of the extruder head.
Figs 3a-3e are cross-sectional views of the cross-section of the strip in the various steps of the process.
Fig 4 is a schematic view of the method according to the present invention.

### Detailed description of the exemplary embodiments

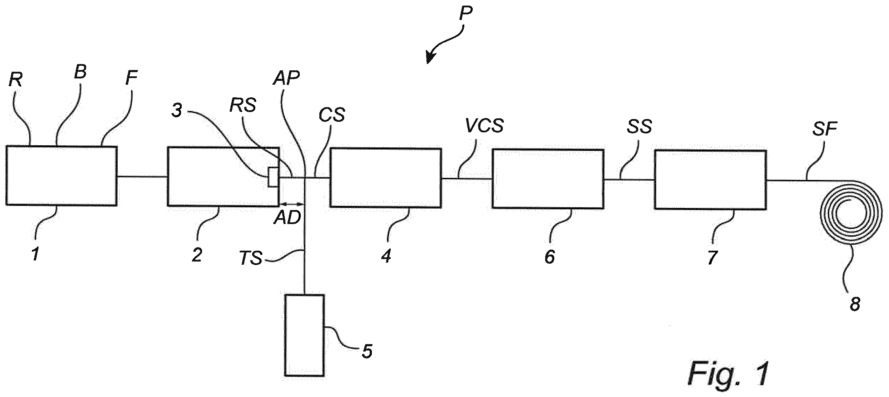

Fig. 1 illustrates a production line P for manufacturing a reinforced expanded rubber sealing strip.

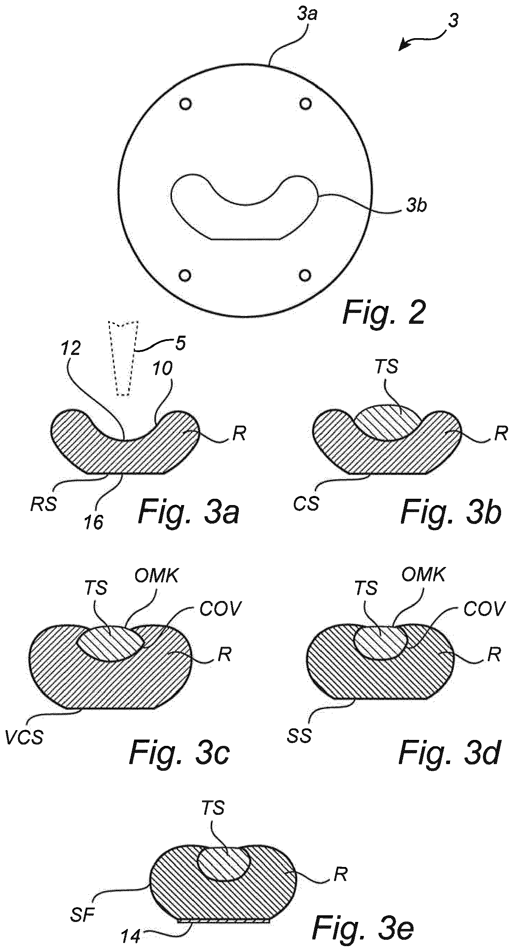

The production line P comprises a mixer 1 and an extruder 2, where an elongated rubber compound strip with a groove running along the length of the strip is produced by extruding a rubber compound comprising a blowing agent. A rubber compound R, for example ethylene-propylene diene terpolymer (EPDM) is mixed with a blowing agent B, for example sodium carbonate, and different kinds of fillers F in the mixer 1 and is fed to the extruder 2 for extrusion at a temperature of about 90-95°C for production of a continuous elongated rubber compound strip RS. The extruder 2 is provided with an extrusion head 3 that has a plate 3a with a shaping aperture 3b, see Fig. 2, for formation of a groove 10 centrally 12 located in the strip RS, as is shown in Fig. 3a. The groove 10 is centrally located as seen from above, or expressed differently, as seen in a cross-section (not illustrated) taken parallell to a mounting face 16.

Returning to Fig. 1, the formed elongated rubber compound strip RS, preferably having, in this position, a density of less than 0,6 kg/dm3, is then fed towards a heating device 4. A reinforcing strip TS of molten thermoplastic material, for example polyethylene PE, with a temperature of, for example, 160-200°C, is injected by an injection needle 5 into the groove 10 of the elongated rubber compound strip RS at an application position AP located downstream of the extruder 2 and upstream of the heating device 4 to form a composite strip CS. The application position AP is located at an application distance AD downstream of the extruder 2, which application distance AD is preferably equal to or less than 2 meter.

The composite strip CS, described in more detail hereinafter with reference to Fig. 3b, is thereafter fed into the heating device 4. The heating device 4 may comprise a bath of salt with a temperature of 200 - 250°C, where the rubber compound R will cure, vulcanize and expand to form a vulcanized composite strip VCS. The vulcanizing and expansion of the rubber compound R will result in the circumference OMK of the strip of molten thermoplastic material TS within the groove 10 becoming enclosed by the rubber R compound to a degree of at least 65%, as illustrated in Fig. 3c, and as described in more detail hereinafter.

The vulcanized composite strip VCS is then fed to a cooling device 6, which may for example be a cooling water bath, with a temperature of 10-50°C. In the cooling device 6, the rubber compound R shrinks and will take its final shape after a short time of cooling, while the strip TS of thermoplastic material will be in a molten stage for a longer time during cooling due to the higher density and the isolating effect from the rubber compound R, and will solidify inside the completed rubber strip to form a reinforced rubber sealing strip SS, as illustrated in Fig 3d.

An application device 7 can be added downstream of the cooling device 6 for applying a non-reinforced adhesive tape 14 to the reinforced expanded sealing strip SS to form a final sealing strip SF. Downstream of the application device 7 a reel 8 is arranged for collecting the final sealing strip SF and for drawing the strip through the production line 1.

The rubber compound R that is added in the mixer 1 can preferably be ethylene-propylene diene terpolymer (EPDM) or styrene-butadiene rubber (SBR). The thermoplastic material TS that is injected into the groove 10 of the elongated rubber compound strip RS can preferably be polyethylene PE and/or polypropylene PP and could be reinforced with a fibrous material, for example glass fibers.

The rubber compound R is feed through an extrusion plate 3a in the extruder head 3 for formation of an elongated rubber compound strip RS. A groove 10 is formed in the central portion 12 of the rubber strip R by an aperture 3b with the shape, shown in fig 2, in the extruder plate 3 for formation of an elongated rubber compound strip RS with the cross-section shown in fig 3a.

Fig 3b shows the cross-section of the composite strip CS where the strip TS of molten thermoplastic material has been injected inside to groove of the rubber compound but before the strip has entered the heating device 4.

Fig 3c shows the cross-section of the formed vulcanized composite strip VCS after the heating in the heating device 4. The rubber compound R with the blowing agent will liberate gas during the heating so that the rubber compound R rises and encloses a part COV of at least 50%, and more preferably at least 65%, of the circumference OMK, of the strip TS of molten thermoplastic material applied in the grove.

Fig 3d shows the cross-section of the formed reinforced expanded rubber sealing strip SS after the cooling device 6, where the reinforced strip RS of thermoplastic material has been embedded in the rubber compound with, preferably, at least 65% COV of the circumference OMK of the strip TS of molten thermoplastic material has been enclosed by the rubber compound R.

Fig 3e shows the cross-section of the final sealing strip SF after application of a non-reinforced adhesive tape 14. The non-reinforced adhesive tape 14 may be applied underneath the rubber compound on the side opposite to the groove 10 with the embedded strip TS of molten thermoplastic material, or on top of the groove 10 with the embedded strip TS of molten thermoplastic material. In the illustrated example, a flat mounting face 16 provides a suitable surface for application of the adhesive tape 14.

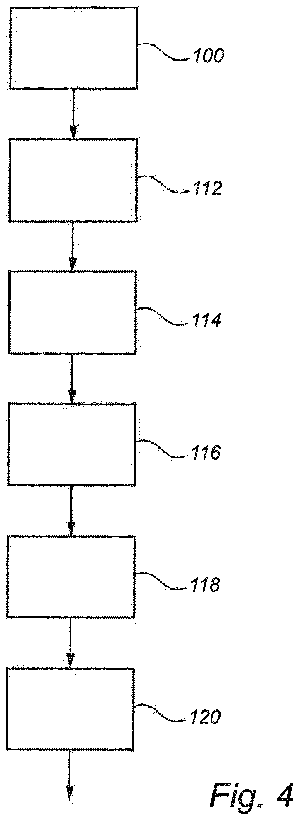

Fig 4 shows the steps according to the method, wherein the rubber compound R, a blowing agent B and different kinds of fillers F are mixed together in a mixing step100. The mixture is fed into an extruder for extrusion, in an extrusion step 112, of the rubber compound for formation of an elongated rubber compound strip RS with a groove 10 in the central portion of the strip. A strip TS of thermoplastic material is applied in a reinforcing strip application step114, into the groove 10 for formation of a composite strip CS. The composite strip CS is heated in a heating step116 to expand and vulcanize the rubber compound strip for formation of a vulcanized composite strip VCS. The vulcanized composite strip VCS is cooled in a cooling step118 to shrink the rubber compound and to solidify the strip TS of thermoplastic material to form a reinforced expanded rubber sealing strip SS. A non-reinforced adhesive tape 14 can be applied, in an adhesive tape application step 120, to the reinforced expanded rubber sealing strip and form a final sealing strip SF.

The invention has mainly been described above with reference to a few embodiments. However, as is readily appreciated by a person skilled in the art, other embodiments that the ones disclosed above are equally possible within the scope of the invention, as defined by the appended patent claims.

## Claims

1. Method of manufacturing a reinforced expanded rubber sealing strip (SS) comprising
extruding, in an extruder (2), a rubber compound (R) comprising a blowing agent (B) so as to form an elongate rubber compound strip (RS) provided with a groove (10) running along the length of the strip (RS);
downstream of the extruder (2), applying a reinforcing strip (TS) of molten thermoplastic material in the groove (10) to form a composite strip (CS) of the rubber compound strip (RS) and the reinforcing strip (TS);
heating the composite strip (CS) to expand and vulcanize the rubber compound strip (RS) to form a vulcanized composite strip (VCS); and
cooling the vulcanized composite strip (VCS) so as to shrink the rubber compound strip (RS) and solidify the strip (TS) of molten thermoplastic material to form the reinforced expanded rubber sealing strip (SS) **characterized in that** said step of applying a reinforcing strip (TS) of molten thermoplastic material in the groove (10) to form a composite strip (CS) of the rubber compound strip (RS) and the reinforcing strip (TS) includes applying the reinforcing strip (TS) of molten thermoplastic material to the elongated rubber compound strip (RS) at an application position (AP), wherein said application position (AP) is located downstream of the extruder (2), but before heating in the heating step (4).

2. Method according to claim 1, where said application position (AP) for applying the reinforcing strip (TS) of molten thermoplastic material to the elongated rubber compound strip (RS) is located at an application distance (AD) downstream of the extruder (2), which application distance (AD) is equal or less than 2 meter.

3. Method according to any of the preceding claims, wherein said step of applying a reinforcing strip (TS) of molten thermoplastic material in the groove (10) to form a composite strip (CS) of the rubber compound strip (RS) and the reinforcing strip (TS) includes applying the reinforcing strip (TS) of molten thermoplastic material inside the groove (10) of the elongated rubber compound strip (RS) with an injection needle (5).

4. Method according to any of the preceding claims, wherein said step of heating the composite strip (CS) to expand and vulcanize the rubber compound strip (RS) to form a vulcanized composite strip (VCS) includes heating the composite strip (CS) to a temperature in the range of 200-250°C to expand and vulcanize the rubber compound strip (RS) to form a vulcanized composite strip (VCS).

5. Method according to any of the preceding claims, wherein, in said step of heating the composite strip (CS) to expand and vulcanize the rubber compound strip (RS) to form a vulcanized composite strip (VCS), the rubber compound (R) expands in the heating device (4) and encloses at least 50% of the circumference (OMK) of the strip (TS) of molten thermoplastic material applied in the groove (10).

6. Method according to claim 4, wherein the rubber compound (R) expands in the heating device (4) and encloses at least 65% of the circumference (OMK) of the strip (TS) of molten thermoplastic material applied in the groove (10).

7. Method according to any one of the preceding claims, wherein, in said step of cooling the vulcanized composite strip (VCS) so as to shrink the rubber compound strip (RS) and solidify the strip (TS) of molten thermoplastic material to form the reinforced expanded rubber sealing strip (SS), the vulcanized composite strip (VCS) is cooled to a temperature in the range of 10- 50°C .

8. Method according to any of the preceding claims, wherein the rubber compound (R) comprises at least one of: ethylene-propylene diene terpolymer (EPDM), and/or styrene-butadiene rubber (SBR).

9. Method according to any of the preceding claims, wherein the thermoplastic material of the strip (TS) comprises polypropylene (PP) and/or polyethylene (PE).

10. Method according to any of the preceding claims, wherein the reinforcing strip (TS) of molten thermoplastic is made of a thermoplastic material reinforced with a fibrous material, preferably glass fiber.

11. Method according to any of the preceding claims, wherein the elongated rubber compound strip (RS) has a density of less than 0,6 kg/dm³ after said step of extruding, in an extruder (2), a rubber compound, and before said step of heating the composite strip (CS) to expand and vulcanize the rubber compound strip (RS) to form a vulcanized composite strip (VCS).

12. Method according to any of the preceding claims, wherein the groove (10) of the rubber compound strip (RS) is centrally (12) located in the strip (RS), as seen in a cross-section taken parallell to a mounting face (16) .

13. Method according to any of the preceding claims, further comprising applying a non-reinforced adhesive tape (14) to the reinforced expanded sealing strip (SS) after said step of cooling the vulcanized composite strip (VCS) so as to shrink the rubber compound strip (RS) and solidify the strip (TS) of molten thermoplastic material to form the reinforced expanded rubber sealing strip (SS).

14. Arrangement for manufacturing of a reinforced expanded rubber sealing strip (SS) comprising
an extruder (2) with an extrusion head for production of an elongated rubber compound strip (RS) with a groove (10) running along the length of the strip, from a rubber compound (R) comprising a blowing agent (B);
an application device (5), such as an injection needle, arranged downstream of the extruder (2) for application of a reinforcing strip (TS) of molten thermoplastic material inside the groove (10) to form a composite strip (CS) of the rubber compound strip (RS) and the reinforcing strip (TS);
a heating device (4), downstream of the application device (5), for heating the composite strip (CS) for expansion and vulcanization of the rubber compound strip (RS) to form a vulcanized composite strip (VCS); and
a cooling device (6), downstream of the heating device (4), for cooling the vulcanized composite strip (VCS) for shrinkage of the rubber compound strip (RS) and solidification of the thermoplastic material of the strip (TS) of molten thermoplastic material for formation of the reinforced expanded rubber sealing strip (SS).

## Patentansprüche

1. Verfahren zum Herstellen eines verstärkten Moosgummi-Dichtstreifens (SS), umfassend
Extrudieren, in einem Extruder (2), einer Gummimischung (R), die ein Treibmittel (B) umfasst, um einen länglichen Gummimischungsstreifen (RS) zu bilden, der mit einer Nut (10) versehen ist, die über die Länge des Streifens (RS) verläuft;
stromabwärts des Extruders (2), Aufbringen eines Verstärkungsstreifens (TS) aus geschmolzenem thermoplastischem Material in die Nut (10), um einen Verbundstreifen (CS) aus dem Gummimischungsstreifen (RS) und dem Verstärkungsstreifen (TS) zu bilden;
Erwärmen des Verbundstreifens (CS) zum Schäumen und Vulkanisieren des Gummimischungsstreifens (RS), um einen vulkanisierten Verbundstreifen (VCS) zu bilden; und
Abkühlen des vulkanisierten Verbundstreifens (VCS), um den Gummimischungsstreifen (RS) zu krimpen und den Streifen (TS) aus geschmolzenem thermoplastischem Material zu verfestigen, um den verstärkten Moosgummi-Dichtstreifen (SS) zu bilden, **dadurch gekennzeichnet, dass** der Schritt des Aufbringens eines Verstärkungsstreifens (TS) aus geschmolzenem thermoplastischem Material in der Nut (10) zur Bildung eines Verbundstreifens (CS) des Gummimischungsstreifen (RS) und des Verstärkungsstreifens (TS) das Aufbringen des Verstärkungsstreifens (TS) aus geschmolzenem thermoplastischem Material auf den länglichen Gummimischungsstreifen (RS) an einer Aufbringungsposition (AP) umfasst, wobei sich die Aufbringungsposition (AP) stromabwärts des Extruders (2), jedoch vor dem Erwärmen im Erwärmungsschritt (4) befindet.

2. Verfahren nach Anspruch 1, wobei sich die Aufbringungsposition (AP) zum Aufbringen des Verstärkungsstreifens (TS) aus geschmolzenem thermoplastischem Material auf den länglichen Gummimischungsstreifen (RS) in einem Aufbringungsabstand (AD) stromabwärts des Extruders (2) befindet, wobei der Aufbringungsabstand (AD) gleich oder kleiner als 2 Meter ist.

3. Verfahren nach einem der vorhergehenden Ansprüche, wobei der Schritt des Aufbringens eines Verstärkungsstreifens (TS) aus geschmolzenem thermoplastischem Material in der Nut (10), um einen Verbundstreifen (CS) des Gummimischungsstreifens (RS) und des Verstärkungsstreifens (TS) zu bilden, das Aufbringen des Verstärkungsstreifens (TS) aus geschmolzenem thermoplastischem Material innerhalb der Nut (10) des länglichen Gummimischungsstreifens (RS) mit einer Injektionsnadel (5) beinhaltet.

4. Verfahren nach einem der vorhergehenden Ansprüche, wobei der Schritt des Erwärmens des Verbundstreifens (CS) zum Schäumen und Vulkanisieren des Gummimischungsstreifens (RS), um einen vulkanisierten Verbundstreifen (VCS) zu bilden, das Erwärmen des Verbundstreifens (CS) auf eine Temperatur im Bereich von 200 bis 250 °C umfasst, um den Gummimischungsstreifen (RS) zu schäumen und zu vulkanisieren, um einen vulkanisierten Verbundstreifen (VCS) zu bilden.

5. Verfahren nach einem der vorhergehenden Ansprüche, wobei, in dem Schritt des Erwärmens des Verbundstreifens (CS) zum Schäumen und Vulkanisieren des Gummimischungsstreifens (RS), um einen vulkanisierten Verbundstreifen (VCS) zu bilden, die Gummimischung (R) in der Erwärmungsvorrichtung (4) schäumt und mindestens 50 % des Umfangs (OMK) des Streifens (TS) aus geschmolzenem thermoplastischem Material, das in der Nut (10) aufgebracht ist, umschließt.

6. Verfahren nach Anspruch 4, wobei die Gummimischung (R) in der Erwärmungsvorrichtung (4) schäumt und mindestens 65 % des Umfangs (OMK) des Streifens (TS) aus geschmolzenem thermoplastischem Material, das in der Nut (10) aufgebracht ist, umschließt.

7. Verfahren nach einem der vorhergehenden Ansprüche, wobei, in dem Schritt des Abkühlens des vulkanisierten Verbundstreifens (VCS) zum Krimpen des Gummimischungsstreifens (RS) und Verfestigen des Streifens (TS) aus geschmolzenem thermoplastischem Material, um den verstärkten Moosgummi-Dichtstreifen (SS) zu bilden, der vulkanisierte Verbundstreifen (VCS) auf eine Temperatur im Bereich von 10 bis 50 °C abgekühlt wird.

8. Verfahren nach einem der vorhergehenden Ansprüche, wobei die Gummimischung (R) mindestens eines von: Ethylen-Propylen-Dien-Terpolymer (EPDM) und/oder Styrol-Butadien-Kautschuk (SBR) umfasst.

9. Verfahren nach einem der vorhergehenden Ansprüche, wobei das thermoplastische Material des Streifens (TS) besteht aus Polypropylen (PP) und/oder Polyethylen (PE) umfasst.

10. Verfahren nach einem der vorhergehenden Ansprüche, wobei der Verstärkungsstreifen (TS) aus geschmolzenem Thermoplast aus einem thermoplastischen Material hergestellt ist, das mit einem faserförmigen Material, vorzugsweise Glasfaser verstärkt ist.

11. Verfahren nach einem der vorhergehenden Ansprüche, wobei der längliche Gummimischungsstreifen (RS) nach dem Schritt des Extrudierens in einem Extruder (2) einer Gummimischung und vor dem Schritt des Erwärmens des Verbundstreifens (CS) zum Expandieren und Vulkanisieren des Gummistreifens (RS), um einen vulkanisierten Verbundstreifen (VCS) zu bilden, eine Dichte von weniger als 0,6 kg/dm³ aufweist.

12. Verfahren nach einem der vorhergehenden Ansprüche, wobei sich die Nut (10) des Gummimischungsstreifens (RS), im Querschnitt parallel zur einer Befestigungsfläche (16), mittig (12) im Streifen (RS) befindet.

13. Verfahren nach einem der vorhergehenden Ansprüche, ferner umfassend Aufbringen eines nicht verstärkten Klebebandes (14) auf den verstärkten geschäumten Dichtstreifen (SS) nach dem Schritt des Abkühlens des vulkanisierten Verbundstreifens (VCS), um den Gummimischungsstreifen (RS) zu krimpen und den Streifen (TS) aus geschmolzenem thermoplastischem Material zu verfestigen, um den verstärkten Moosgummi-Dichtstreifen (SS) zu bilden.

14. Anordnung zum Herstellen eines verstärkten Moosgummi-Dichtstreifens (SS), umfassend
einen Extruder (2) mit einem Extrusionskopf zur Herstellung eines länglichen Gummimischungsstreifens (RS) mit einer Nut (10), die über die Länge des Streifens verläuft, aus einer Gummimischung (R), die ein Treibmittel (B) umfasst;
eine Aufbringungsvorrichtung (5), wie eine Injektionsnadel, die stromabwärts des Extruders (2) angeordnet ist, zur Aufbringung eines Verstärkungsstreifens (TS) aus geschmolzenem thermoplastischem Material in die Nut (10), um einen Verbundstreifen (CS) aus dem Gummimischungsstreifen (RS) und dem Verstärkungsstreifen (TS) zu bilden;
eine Erwärmungsvorrichtung (4) stromabwärts der Aufbringungsvorrichtung (5) zum Erwärmen des Verbundstreifens (CS) zum Schäumen und Vulkanisieren des Gummimischungsstreifens (RS), um einen vulkanisierten Verbundstreifen (VCS) zu bilden; und
eine Kühlvorrichtung (6) stromabwärts der Erwärmungsvorrichtung (4) zum Kühlen des vulkanisierten Verbundstreifens (VCS) zum krimpen des Gummimischungsstreifens (RS) und zum Verfestigen des thermoplastischen Materials des Streifens (TS) aus geschmolzenem thermoplastischem Material zur Bildung des verstärkten Moosgummi-Dichtstreifens (SS).

## Revendications

1. Procédé de fabrication d'une bande d'étanchéité de caoutchouc cellulaire et renforcé (SS) comprenant
extrusion, dans une extrudeuse (2), d'un composé de caoutchouc (R) comprenant un agent de soufflage (B) de manière à former une bande composite de caoutchouc allongée (RS) pourvue d'une gorge (10) passant le long de la longueur de la bande (RS) ;
en aval de l'extrudeuse (2), application dans la gorge (10) d'une bande de renfort (TS) en matériau thermoplastique fondu afin de former une bande composite (CS) composée de la bande composite de caoutchouc (RS) et la bande de renfort (TS) ;
chauffage de la bande composite (CS) afin de dilater et de vulcaniser la bande composite de caoutchouc (RS) pour former une bande composite vulcanisée (VCS) ; et
refroidissement de la bande composite vulcanisée (VCS) de manière à rétracter la bande composite de caoutchouc (RS) et à solidifier la bande (TS) de matériau thermoplastique fondu afin de former la bande d'étanchéité de caoutchouc cellulaire renforcé (SS) **caractérisé en ce que** ladite étape d'application dans la gorge (10) d'une bande de renfort (TS) en matériau thermoplastique fondu afin de former une bande composite (CS) composée de la bande composite de caoutchouc (RS) et la bande de renfort (TS) inclut l'application de la bande de renfort (TS) en matériau thermoplastique fondu sur la bande de composite de caoutchouc allongée (RS) à une position d'application (AP), ladite position d'application (AP) se situant en aval de l'extrudeuse (2), mais avant le chauffage dans l'étape de chauffage (4).

2. Procédé selon la revendication 1, dans lequel ladite position d'application (AP) pour l'application de la bande de renfort (TS) en matériau thermoplastique fondu sur la bande composite en caoutchouc allongée (RS) se situe à une distance d'application (AD) en aval de l'extrudeuse (2), laquelle distance d'application (AD) est inférieure ou égale à 2 mètres.

3. Procédé selon l'une quelconque des revendications précédentes, dans lequel ladite étape d'application dans la gorge (10) d'une bande de renfort (TS) en matériau thermoplastique fondu afin de former une bande composite (CS) composée de la bande composite de caoutchouc (RS) et de la bande de renfort (TS) inclut l'application de la bande de renfort (TS) en matériau thermoplastique fondu à l'intérieur de la gorge (10) de la bande composite en caoutchouc allongée (RS) avec une aiguille d'injection (5).

4. Procédé selon l'une quelconque des revendications précédentes, dans lequel ladite étape de chauffage de la bande composite (CS) pour dilater et vulcaniser la bande composite de caoutchouc (RS) afin de former une bande composite vulcanisée (VCS) inclut le chauffage de la bande composite (CS) à une température de l'ordre de 200 à 250°C pour dilater et vulcaniser la bande composite de caoutchouc (RS) afin de former une bande composite vulcanisée (VCS).

5. Procédé selon l'une quelconque des revendications précédentes, dans lequel, dans ladite étape de chauffage de la bande composite (CS) pour dilater et vulcaniser la bande composite de caoutchouc (RS) afin de former une bande composite vulcanisée (VCS), le composite de caoutchouc (R) se dilate dans le dispositif de chauffage (4) et renferme au moins 50 % de la circonférence (OMK) de la bande (TS) de matériau thermoplastique fondu appliquée dans la gorge (10).

6. Procédé selon la revendication 4, dans lequel le composite de caoutchouc (R) se dilate dans le dispositif de chauffage (4) et renferme au moins 65 % de la circonférence (OMK) de la bande (TS) de matériau thermoplastique fondu appliquée dans la gorge (10).

7. Procédé selon l'une quelconque des revendications précédentes, dans lequel, dans ladite étape de refroidissement de la bande composite vulcanisée (VCS) destinée à rétracter la bande composite de caoutchouc (RS) et à solidifier la bande (TS) de matériau thermoplastique fondu (SS), la bande composite vulcanisée (VCS) est refroidie à une température de 10 à 50 °C.

8. Procédé selon l'une quelconque des revendications précédentes, dans lequel le composite de caoutchouc (R) comprend au moins une substance parmi les suivantes : éthylène-propylène diène terpolymère (EPDM), et/ou styrène-butadiène caoutchouc (SBR).

9. Procédé selon l'une quelconque des revendications précédentes, dans lequel le matériau thermoplastique de la bande (TS) contient du polypropylène (PP) et/ou du polyéthylène (PE).

10. Procédé selon l'une quelconque des revendications précédentes, dans lequel la bande de renfort (TS) en matériau thermoplastique fondu est composée de d'un matériau thermoplastique renforcé avec un matériau fibreux, de préférence de la fibre de verre.

11. Procédé selon l'une quelconque des revendications précédentes, dans lequel la bande composite de caoutchouc allongée (RS) a une densité de moins de 0,6 kg/dm3 après ladite étape d'extrusion, dans une extrudeuse (2), d'un composé de caoutchouc et avant ladite étape de chauffage de la bande composite (CS) pour dilater et vulcaniser la bande composite de caoutchouc (RS) afin de former une bande composite vulcanisée (VCS).

12. Procédé selon l'une quelconque des revendications précédentes, dans lequel la gorge (10) de la bande composite de caoutchouc (RS) est située au centre (12) de la bande (RS), vue en une coupe transversale réalisée parallèlement à une face de montage (16).

13. Procédé selon l'une quelconque des revendications précédentes, comprenant en outre l'application d'un ruban adhésif non renforcé (14) sur la bande étanchéité cellulaire renforcée (SS) après ladite étape de refroidissement de la bande composite vulcanisée (VCS) de manière à rétracter la bande composite de caoutchouc (RS) et à solidifier la bande (TS) de matériau thermoplastique fondu pour former la bande d'étanchéité de caoutchouc cellulaire renforcé (SS).

14. Dispositif de fabrication d'une bande d'étanchéité de caoutchouc cellulaire et renforcé (SS) comprenant
une extrudeuse (2) dotée d'une tête d'extrusion pour la production d'une bande composite de caoutchouc allongée (RS) pourvue d'une gorge (10) passant le long de la longueur de la bande, à partir d'un composé de caoutchouc (R) contenant un agent de soufflage (B) ;
un dispositif d'application (5), comme une aiguille d'injection, disposé en aval de l'extrudeuse (2), pour l'application d'une bande de renfort (TS) en matériau thermoplastique fondu à l'intérieur de la gorge (10) afin de former une bande composite de caoutchouc (CS) composée de la bande composite de caoutchouc (RS) et de la bande de renfort (TS) ;
un dispositif de chauffage (4), en aval du dispositif d'application (5), pour chauffer la bande composite (CS) pour la dilatation et la vulcanisation de la bande composite de caoutchouc (RS) afin de former une bande composite vulcanisée (VCS) ; et
un dispositif de refroidissement (6), en aval du dispositif de chauffage (4), pour refroidir la bande composite vulcanisée (VCS) pour la rétraction de la bande composite de caoutchouc (RS) et la solidification du matériau thermoplastique de la bande (TS) en matériau thermoplastique fondu pour la formation de la bande d'étanchéité en caoutchouc cellulaire et renforcé (SS).
